# EUROPEAN PATENT SPECIFICATION

(11) **EP 3 778 360 B1**
(45) Date of publication and mention of the grant of the patent: **14.08.2024**
(21) Application number: 19774378.4
(22) Date of filing: 25.03.2019
(51) Int. Cl.: B62J 45/00, B62J 9/14

(54) **USB TERMINAL UNIT ARRANGEMENT STRUCTURE FOR SADDLE RIDING-TYPE VEHICLE**
AUFBAU EINER USB-ANSCHLUSSEINHEITSANORDNUNG FÜR EIN SATTELFAHRZEUG
STRUCTURE D'AGENCEMENT D'UNITÉ DE BORNE USB POUR VÉHICULE DE TYPE À SELLE

(30) Priority: 29.03.2018 JP 2018064806
(43) Date of publication of application: 17.02.2021
(73) Proprietor: HONDA MOTOR CO., LTD., Minato-ku Tokyo 107-8556 (JP)
(72) Inventor: SENOKUCHI Yuta, Wako-shi, Saitama 351-0193 (JP); KITAMURA Ryohei, Wako-shi, Saitama 351-0193 (JP); YAMADA Tsuyoshi, Wako-shi, Saitama 351-0193 (JP)
(74) Representative: Kiwit, Benedikt
(86) International application number: PCT/JP2019/012513
(87) International publication number: WO 2019/188985

(56) References cited:
- EP-A1- 2 772 420
- WO-A1-2014/158100
- CN-A- 105 774 976
- CN-A- 105 774 976
- CN-A- 108 394 500
- CN-U- 203 237 350
- CN-U- 207 120 828
- CN-U- 207 120 828
- TW-U- M 455 894
- TW-U- M 455 894
- US-A1- 2011 230 087
- US-B2- 8 323 050
- YAMAHA : "Instruction Manual NMAX125", INSTRUCTION MANUAL NMAX125, 31 July 2015 (2015-07-31), pages 1 - 66, XP009523908
- ANONYMOUS: "Yamaha you shop", 5 August 2016 (2016-08-05), pages 1 - 5, XP055639935, Retrieved from the Internet <URL:http:ybike.jugem.jp/?eid=459>
- ANONYMOUS: "Assembly of the room is continuing, Yamaki yard's daily life", 9 February 2018 (2018-02-09), pages 1 - 8, XP055639940, Retrieved from the Internet <URL:http:yamakiyard.seesaa.net/article/456780234.html>

## Description

### TECHNICAL FIELD

The present invention relates to a USB terminal unit disposition structure for a saddle-ride type vehicle.

### BACKGROUND ART

In the related art, there is a saddle-ride type vehicle that includes a luggage box capable of accommodating an article below a seat and a charging unit capable of charging an external device at the bottom of the luggage box (refer to Japanese Patent No. JP 5 624 002 B2, for example). In this technology, for allowing an article to be put in and taken out of the luggage box even in a state in which the external device is connected to the charging unit, a connection cord extends from the charging unit to be arranged outside the luggage box, the external device can be supported by a bottom plate of the seat, and the connection cord is guided toward this external device to connect the charging unit and the external device to each other.

CN 105 774 976 A shows a structure according to the preamble of claim 1.

### SUMMARY

### PROBLEMS TO BE SOLVED BY THE INVENTION

Meanwhile, in a case in which a mobile device such as a smartphone is connected to the above-described charging unit with a USB connector, an adapter corresponding to a USB plug on the device side is used, and thus connection of the device is complicated. Further, it is desirable for the charging unit to be able to be used for various types of communication in addition to power supply. Furthermore, since the types and sizes of external devices are diverse, it is more desirable for the external devices stored in the luggage box to be able to be directly connected to the charging unit. Therefore, it is desirable for a USB port (a socket) to be installed in the luggage box. However, particularly in the saddle-ride type vehicle, attachment and detachment of the USB plug may be performed outdoors often, and thus there is a need for a structure in which the protection property of the USB port is fully considered and also usability unique to the saddle-ride type vehicle is considered.

Therefore, the present invention provides a USB terminal unit disposition structure of a saddle-ride type vehicle which can enhance the protection property and usability of a USB terminal unit for connecting an external device.

### MEANS FOR SOLVING THE PROBLEM

As a means for solving the above-described problems, a first aspect of the present invention includes a seat (5) on which an occupant sits; an article storage box (13) which is provided below the seat (5) and of which an upper opening (13d) is opened and closed by the seat (5); and a USB terminal unit (52) which has at least one of a power supply function and a communication function and into and from which a connection terminal (51) of an external device is inserted and detached in a predetermined insertion-detachment direction (W1), wherein the article storage box (13) includes a side wall (13f) extending from the upper opening (13d) toward a bottom wall (13e) thereof, wherein the USB terminal unit (52) has a terminal connection port (53) disposed in the side wall (13f) of the article storage box (13), and the terminal connection port (53) opens toward an inside of the article storage box (13), wherein the side wall (13f) comprises a vehicle body side opening (31) that exposes the terminal connection port (53) of the USB terminal unit (52) inside the article storage box (13), wherein most of the USB terminal unit (52) is disposed on the back side of the side wall (13f) being outside the article storage box (13), wherein the USB terminal port (52) is shielded with the side wall (13f) except for the terminal connection port (53) and a protrusion (58) of a casing (55) of the USB terminal unit (52), wherein the side wall (13f) further comprises a recess (32) obtained by recessing a periphery of the vehicle body side opening (31) from inside the article storage box (13), wherein the recess (32) is recessed with respect to a flat general surface (27d) of the side wall (13f) except for the periphery of the vehicle body side opening (31) when viewed from a front side of the side wall (13f), wherein in the recess (32), the protrusion (58) of the casing (55), which protrudes from the vehicle body side opening (31) to the front side of the side wall (13f), faces the front side, wherein the protrusion (58), and consequently the USB terminal unit (52), does not protrude to the front side from the flat general surface (27d) of the side wall (13f), and wherein the recess (32) has a tapered portion (32a) extending in the insertion-detachment direction (W1), and the recess (32) is provided with a display portion (33) for notifying a user of a presence and a position of the terminal connection port (53), wherein the display portion (33) is provided on a lower wall (32c) of the tapered portion (32a) of the recess (32), which is inclined upward.

According to this configuration, it is possible to directly connect the connection terminal of the external device stored in the article storage box to the terminal connection port that opens inside the article storage box without using an adapter. For this reason, complexity and reduction of an article storage space due to use of the adapter can be suppressed, and charging, communication, or the like can be performed with respect to various types of external devices including a large external device while accommodating the external devices in the article storage box. Therefore, convenience of the vehicle can be improved. Further, since the USB terminal unit opens on an inner side surface of the article storage box which is erected, it is difficult for water or dust to enter the terminal connection port, the waterproof property and the dustproof property of the USB terminal unit are enhanced, and it is difficult for the terminal connection port to be blocked by the stored article. Therefore, convenience of the article storage box and the USB terminal unit can be improved.

In addition, since the terminal connection port is disposed inside the recess provided in the side wall, interference between an article stored in an article storage box and the USB terminal unit can be suppressed, and the protection property of the USB terminal unit can be enhanced. Further, the recess provided at a periphery of the vehicle body side opening (the terminal connection port) makes it possible to visually and tactually recognize the presence and position of the terminal connection port, and thus it is possible to make insertion of the connection terminal easier.

According to a second aspect of the present invention, the above-described first aspect further includes a side stand (19) which is disposed on one side of a vehicle body in a vehicle width direction to support the vehicle body in a standing state in which the vehicle is inclined to the one side in the vehicle width direction, wherein the terminal connection port (53) is disposed in the side wall (13f) opposite to the side stand (19) in the vehicle width direction.

According to this configuration, a user standing on the side stand side can easily see the terminal connection port, and usability of the USB terminal unit can be enhanced. Further, when the vehicle is stopped using the side stand, the terminal connection port easily faces downward due to an inclination of the vehicle body, and the waterproof property and the dustproof property of the USB terminal unit can be enhanced.

According to a third aspect of the present invention, the above-described first or second aspect further includes a side stand (19) which supports the vehicle body in a standing state in which the vehicle is inclined to a one side in a vehicle width direction, wherein the terminal connection port (53) is disposed to face downward at least in a vehicle body standing state in which the side stand (19) is used.

According to this configuration, when the vehicle is stopped using the side stand, the terminal connection port faces downward due to an inclination of the vehicle body, and thus the waterproof property and the dustproof property of the USB terminal unit can be enhanced.

According to a fourth aspect of the present invention, in any one of the above-described first to third aspects, the article storage box (13) has a storage compartment (13a) capable of storing a helmet (HL), and the terminal connection port (53) is disposed to avoid central portions (13a1 and 13a2) of the storage compartment (13a) in a vehicle front-rear direction and a vehicle width direction.

According to this configuration, in a case in which the spherical helmet is stored in the storage compartment, the helmet approaches the side wall in the central portions of the storage compartment in the vehicle front-rear direction and the vehicle width direction. Meanwhile, according to the fourth aspect, by disposing the terminal connection port to avoid the central portions of the storage compartment in the vehicle front-rear direction and the vehicle width direction, the terminal connection port and the connection terminal connected thereto do not easily affect storage of the helmet, and convenience of the article storage box can be enhanced.

According to a fifth aspect of the present invention, in any one of the above-described first to fourth aspects, the USB terminal unit (52) is attachable to and detachable from inside the article storage box (13) with respect to a harness (Hr) arranged on a vehicle body side.

According to this configuration, in the configuration in which the USB terminal unit is attached and detached from outside the article storage box when the USB terminal unit is attached to and detached with respect to the vehicle body side harness, it is necessary to attach and detach a vehicle body cover that covers an outside of the article storage box and the entire luggage box, and thus attachment and detachment of the USB terminal unit are complicated. Meanwhile, according to the sixth aspect, the USB terminal unit can be attached to and detached with respect to the vehicle body side harness from inside the article storage box, so that attachment and detachment of the USB terminal unit can be facilitated, and assembly and maintenance of the USB terminal unit can be improved.

According to a sixth aspect of the present invention, in any one of the above-described first to fifth aspects, the side wall (13f) includes a terminal attachment portion (13f2) which is a separate body from a side wall main body (13f1) thereof and to which the USB terminal unit (52) is attached, and the terminal attachment portion (13f2) is attachable to and detachable with respect to the side wall main body (13f1).

According to this configuration, since the terminal attachment portion including a fastening boss and the like required for attaching the USB terminal unit is a separate body from the side wall main body, and consequently a main body of the article storage box, an influence on formability of the article storage box due to provision of the attachment element for the USB terminal unit can be suppressed. Further, by dismantling the terminal attachment portion, it is possible to attach and detach the vehicle body side harness to and from the USB terminal unit from inside the article storage box, and attachment and detachment of the USB terminal unit can be facilitated.

### ADVANTAGE OF THE INVENTION

According to the present invention, it is possible to provide a USB terminal unit disposition structure of a saddle-ride type vehicle which can enhance the protection property and usability of a USB terminal unit for connecting an external device.

### BRIEF DESCRIPTION OF THE DRAWINGS

Fig. 1 is a left side view of a motorcycle according to an embodiment of the present invention.
Fig. 2 is a plan view of the above-described motorcycle.
Fig. 3 is a plan view corresponding to Fig. 2 with a seat of the above-described motorcycle removed.
Fig. 4 is a left side view of a vehicle body rear portion of the above-described motorcycle.
Fig. 5 is a rear view of the above-described motorcycle in a standing state in which a side stand is used.
Fig. 6 is a perspective view of a USB port.
Fig. 7 is a side view of the USB port including a cross section of a side wall to which the USB port is attached.
Fig. 8 is a perspective view of the vicinity of a port opening from above on a front side of the side wall to which the USB port is attached.
Fig. 9 is a perspective view showing a state in which the USB port is attached from a back side of the above-described side wall and a state in which a port attachment portion is removed from a side wall main body.
Fig. 10 is a cross-sectional view along line X-X of Fig. 4.
Fig. 11 is a cross-sectional view along line XI-XI of Fig. 4.
Fig. 12 is a plan view corresponding to Fig. 3 and showing a modification example of the above-described embodiment.

### DESCRIPTION OF THE EMBODIMENTS

Hereinafter, embodiments of the present invention will be described with reference to the drawings. Note that front, rear, left, and right directions in the following description are the same as directions in a vehicle described below unless otherwise specified. Further, an arrow FR indicating a forward direction with respect to the vehicle, an arrow LH indicating a leftward direction with respect to the vehicle, an arrow UP indicating an upward direction with respect to the vehicle, and a line CL indicating a lateral center of a vehicle body are shown at appropriate places in the drawings used in the following description.

### <Whole vehicle>

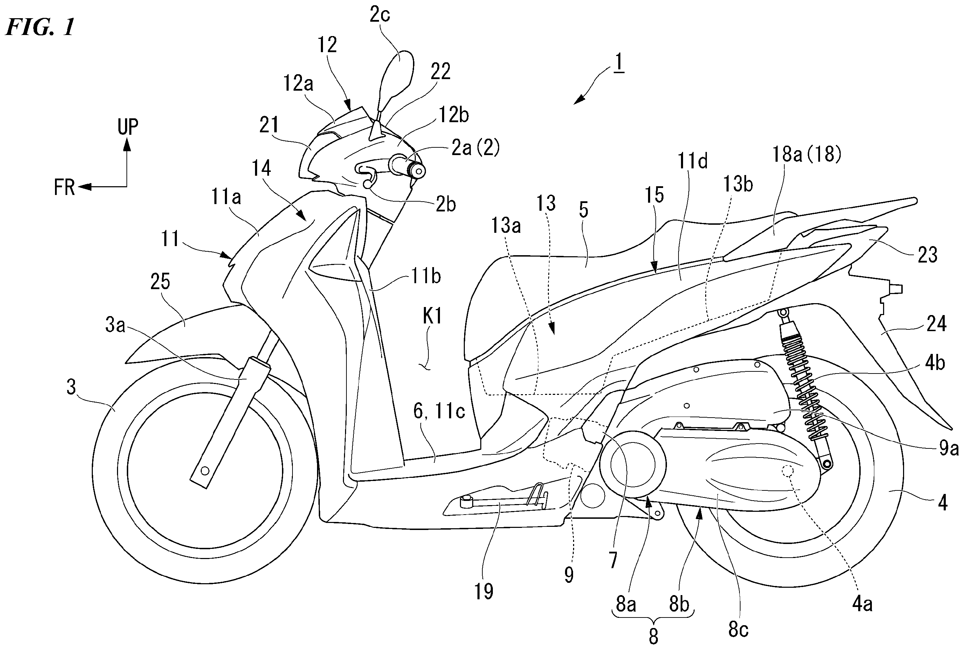

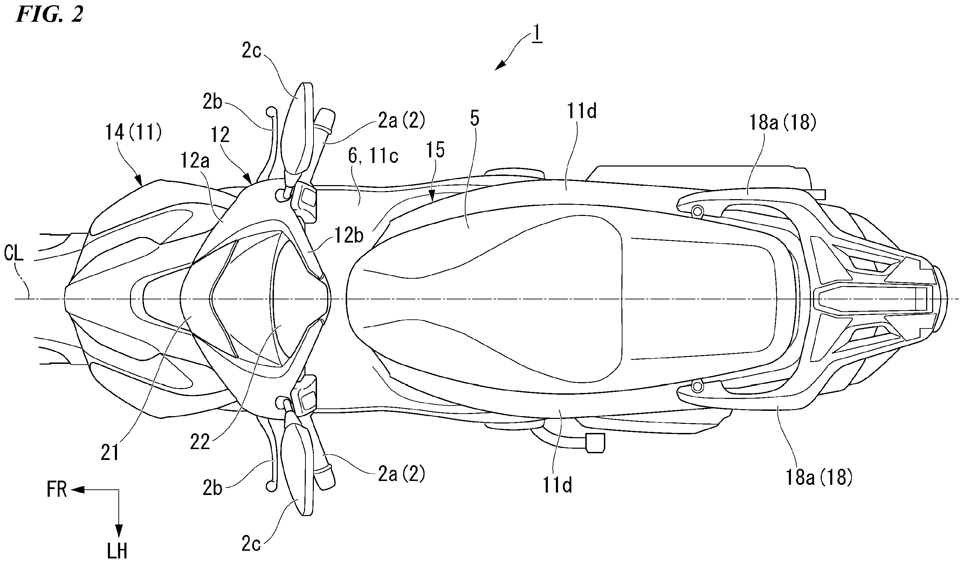

Fig. 1 shows a scooter type motorcycle 1 as an example of a saddle-ride type vehicle. The motorcycle 1 includes a front wheel 3 that is a steering wheel and a rear wheel 4 that is a driving wheel. The front wheel 3 is supported by a front fork 3a and can be steered by a bar handle 2. An accelerator grip is attached to a right grip 2a among left and right grips 2a (see Fig. 2) of the bar handle 2. The rear wheel 4 is supported by a swing type power unit 8 and can be driven by the power unit 8. In the drawing, reference sign 4a denotes a rear wheel axle, and reference sign 4b denotes a rear cushion.

Components of a steering system including the bar handle 2, the front fork 3a, and the front wheels 3 are supported by a front end portion of a vehicle body frame (not shown) to be steerable. A front portion of the power unit 8 is supported by a lower portion of the vehicle body frame to be vertically swingable.

A step floor 6 on which a driver puts his/her feet is provided between the front wheels 3 and the rear wheels 4. A leg shield 14 is provided in front of the step floor 6. A rear body 15 is provided behind the step floor 6.

A seat 5 on which an occupant sits is supported on the rear body 15. A space K1 between the bar handle 2 and the seat 5 (a space above the step floor 6) is a straddling space K1 that is used when the driver straddles the vehicle body. Foldable pillion steps 7 on which a rear passenger sitting on a rear portion of the seat 5 puts his/her feet are provided on both lower sides of the rear body 15. A foldable side stand 19 that can support the vehicle body in a standing state in which the vehicle body is inclined to a left side is provided on a lower left side of the step floor 6

The power unit 8 includes an engine 8a that is an internal combustion engine, and a transmission device (for example, a belt-type continuously variable transmission) 8b that transmits a driving force generated by the engine 8a to the rear wheels 4.

The engine 8a has a crankshaft extending in a vehicle width direction (a left-right direction), and a cylinder 9 protrudes substantially horizontally forward (specifically, to be slightly inclined forward and upward) from a front end of a crankcase (not shown). An intake pipe (not shown) is connected to an upper portion (an intake side) of the cylinder 9. An exhaust pipe (not shown) is connected to a lower portion (an exhaust side) of the cylinder 9.

The transmission device 8b includes a transmission case 8c extending rearward from one side (a left side) of the crankcase in the vehicle width direction. An air cleaner case 9a to which an upstream side of the intake pipe is connected is supported above the transmission case 8c.

A periphery of the vehicle body frame of the motorcycle 1 is covered with a vehicle body cover 11. The vehicle body cover 11 includes a front cover 11a that covers a front portion of the vehicle body frame from a front side, an inner cover 1 1b that covers the front portion of the vehicle body frame from a rear side, a floor cover 11c that covers the lower portion of the vehicle body frame from above, and a rear body cover 11d that covers a rear portion of the vehicle body frame from the front side and a lateral side. The front cover 11a and the inner cover 11b constitute a leg shield 14 that covers the front of the legs of the driver. The rear body cover 11d forms an outer surface of the rear body 15.

A periphery of the bar handle 2 is covered with a handle cover 12. The handle cover 12 includes a front handle cover 12a that covers the bar handle 2 from the front side, and a rear handle cover 12b that covers the bar handle 2 from the rear side. The handle cover 12 can pivot together with the bar handle 2 with respect to the vehicle body frame and the vehicle body cover 11. A head lamp 21 is disposed at a central portion of the front handle cover 12a in the vehicle width direction. A meter unit 22 is disposed at a central portion of the rear handle cover 12b in the vehicle width direction.

A pair of left and right operation levers (for example, front and rear brake levers) 2b that can be operated by the hands of the driver which hold the left and right grips 2a are disposed in front of the left and right grips 2a. Reference sign 2c in the drawing denotes a pair of left and right rearview mirrors that penetrate through both sides of the handle cover 12 in the vehicle width direction and are supported by the bar handle 2.

A container-shaped luggage box 13 that opens upward is disposed inside the rear body cover 11d. An upper opening of the luggage box 13 can be opened and closed by the seat 5 pivoting around a front end. The luggage box 13 is long in a front-rear direction like the seat 5 having front and rear seating surfaces. A relatively deep front storage compartment 13a is formed at the front of the luggage box 13 and can store a helmet. A relatively shallow rear storage compartment 13b is formed at the rear of the luggage box 13. A rear carrier 18 including left and right rear grips 18a that can be gripped by a rear passenger is disposed behind the seat 5 in an upper rear portion of the rear body 15.

In Fig. 1, reference sign 23 denotes a rear combination lamp disposed at a rear end of the rear body 15, reference sign 24 denotes a rear fender extending rearward and downward from the rear combination lamp 23, and reference sign 25 denotes a front fender pivoting together with the steering system.

### <USB port>

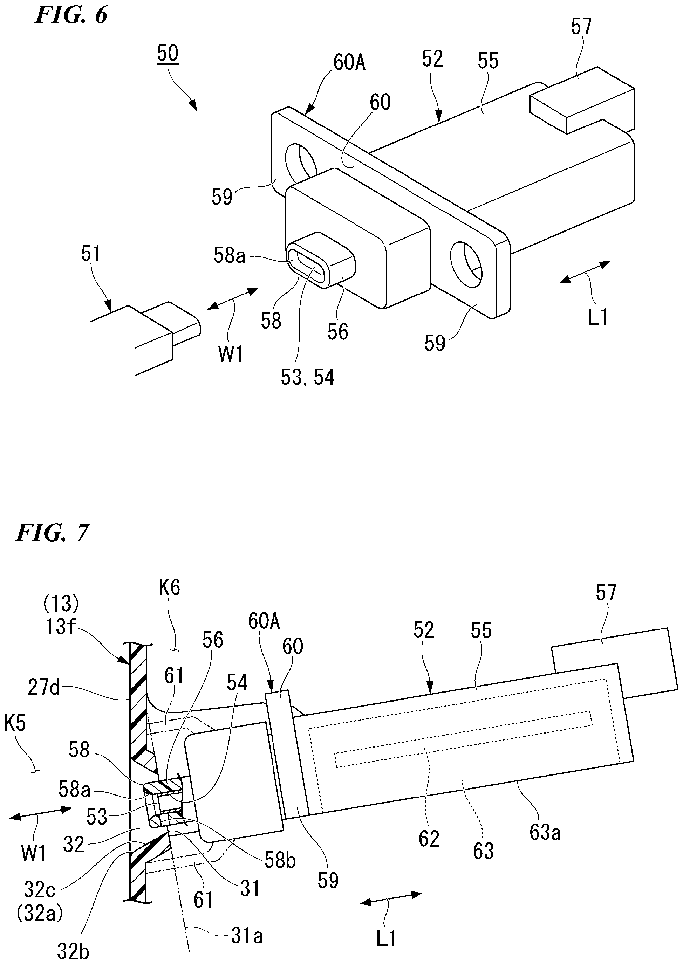

Referring to Fig. 6, the motorcycle 1 can be connected to an external device such as a smartphone by a Universal Serial Bus (USB) connector 50. The USB connector 50 is constituted by a USB plug (a connection terminal) 51 on the external device side and a USB port (a USB terminal unit) 52 as a socket on the vehicle side. For example, the USB port 52 of the present embodiment has a power supply function and a communication function.

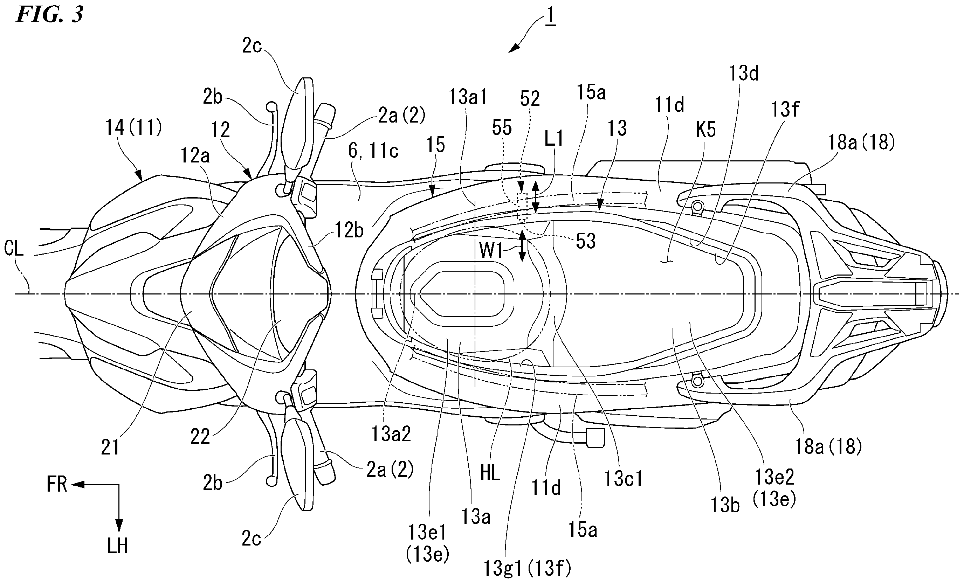

Referring to Figs. 3 and 7, the USB port 52 has a port opening 53 disposed inside the luggage box 13 below the seat 5, for example. Accordingly, it is possible to connect the external device to the USB port 52 while accommodating the external device in the luggage box 13.

As the USB connector 50, a connector that conforms to an existing standard is adopted, and it is particularly preferable to use the later-developed "USB Type-C". This is because if the USB port 52 is "USB Type-C", it has the waterproof property suitable for a saddle-ride type vehicle and also improves a power supply capability and a communication capability. Note that the USB connector may be provided with a cap that is attachable to and detachable from the USB port 52. The external device is not limited to the smartphone, and may be a tablet, a navigation terminal, an audio device, an illumination device, a charger, an external memory, or the like, for example.

Referring to Figs. 6 and 7, the USB port 52 includes a mouthpiece portion 54 serving as a mechanical joint for inserting and detaching the USB plug 51 in a predetermined insertion-detachment direction (indicated by an arrow W1 in the drawings), and a casing 55 that supports the mouthpiece portion 54 and is fixed to the vehicle body side (the luggage box 13).

The mouthpiece portion 54 has a flat hollow cross-sectional shape, for example, and extends in the insertion-detachment direction W1. A port opening 53 through which the USB plug 51 is inserted and detached is formed at an end portion of the mouthpiece portion 54 on one end side (the side from which the USB plug 51 is detached, hereinafter referred to as a detachment side) in the insertion-detachment direction W1. A plurality of terminals (not shown) are arranged inside the mouthpiece portion 54 facing the port opening 53.

The casing 55 is formed of an insulating resin, for example, and has a rectangular parallelepiped outer shape, for example, that is long in the insertion-detachment direction W1. An arrow L1 in the drawing indicates a longitudinal direction of the casing 55 (the USB port 52). A mouthpiece holding portion 56 that protrudes toward the detachment side in the insertion-detachment direction W1 is formed at an end portion of the casing 55 on the detachment side in the insertion-detachment direction W1. A coupler 57 capable of connecting a vehicle body side harness arranged on the vehicle body side thereto is provided on the other end side (the side into which the USB plug 51 is inserted, hereinafter referred to as an insertion side) of the casing 55 in the insertion-detachment direction W1. The mouthpiece portion 54 may be omitted from the USB port 52. That is, the mouthpiece portion 54 constitutes a mechanical joint for inserting and detaching the USB plug 51 in the insertion-detachment direction W1. Note that a resin joint may be formed at a portion of the casing 55 corresponding to the mouthpiece holding portion 56 with the mouthpiece portion 54 omitted.

The mouthpiece holding portion 56 is provided to cover an outer periphery of the mouthpiece portion 54. A tip end portion of the mouthpiece holding portion 56 is provided with a protrusion 58 that protrudes toward the detachment side from a tip end portion (the port opening 53) of the mouthpiece portion 54. The protrusion 58 is provided in an annular shape to surround an outer periphery of the port opening 53 over the entire periphery. The protrusion 58 is provided so that an inner peripheral edge thereof overlaps with a peripheral edge of the port opening 53 (in other words, adjacent to the peripheral edge of the port opening 53) when viewed in the insertion-detachment direction W1.

A guide portion 58a is provided on a front end side and an inner peripheral side of the protrusion 58, and is inclined to widen a vehicle body side opening 31 toward the detachment side in the insertion-detachment direction W1. The guide portion 58a functions as a guide portion that guides the USB plug 51 approaching from the detachment side in the insertion-detachment direction W1 to the port opening 53. A drain hole 58b (see Fig. 7) that guides water which has entered the protrusion 58 to a lower side of the protrusion 58 is provided on a downward side of a base portion (an end portion on the insertion side in the insertion-detachment direction W 1) of the protrusion 58 in an on-vehicle state. Note that a drain portion of the water in the protrusion 58 is not limited to the drain hole 58b, and may be a drain groove, a cutout, or the like, for example.

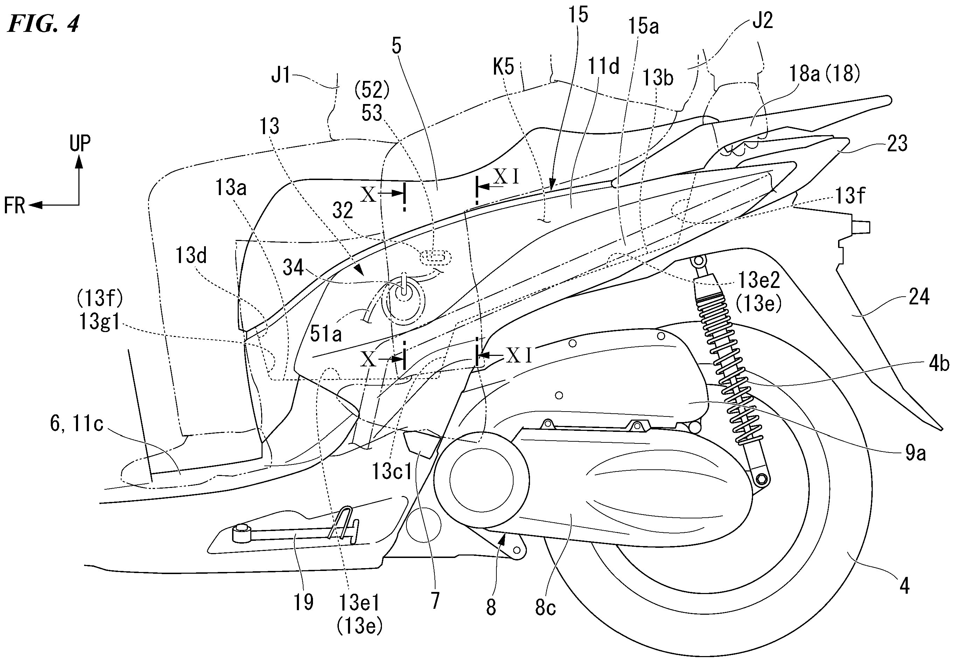

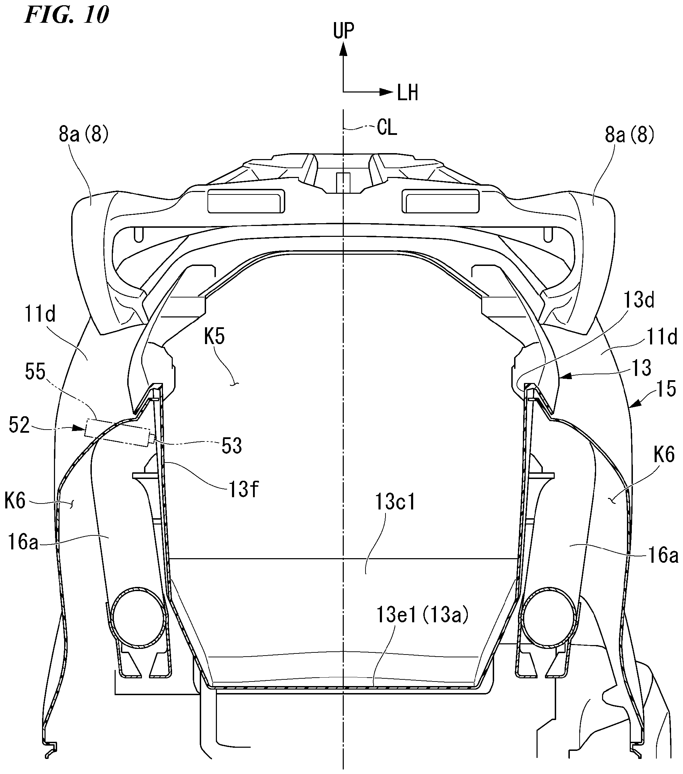

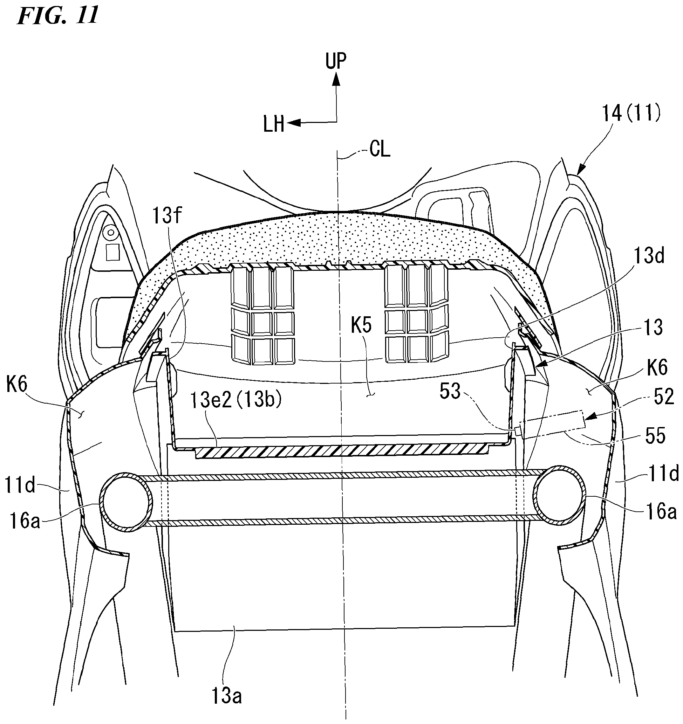

Referring to Figs. 3, 4, 10, and 11, the USB port 52 is attached to a side wall 13f of the luggage box 13, for example. The side wall 13f extends downward from an upper opening 13d side (an upper side) toward a box bottom wall 13e. The bottom wall 13e of the luggage box 13 is a portion located on a side opposite to the upper opening 13d in a vertical direction (a portion facing the upper opening 13d in the vertical direction). A storage article can be placed on an upper surface side of the bottom wall 13e. In a case in which an outer peripheral portion of the bottom wall 13e is bent or curved upward, for example, a range up to 45 degrees with respect to a horizontal plane is referred to as the bottom wall 13e. The side wall 13f of the luggage box 13 hangs down from a peripheral edge of the upper opening 13d toward a peripheral edge of the bottom wall 13e. The side wall 13f includes a whole portion extending in the vertical direction to intersect with the bottom wall 13e in addition to a portion rising upward from the peripheral edge of the bottom wall 13e. The side wall 13f includes a step wall 13b1 that will be described below, which is formed in a front-rear intermediate portion of the bottom wall 13e. In Fig. 4, reference sign J1 denotes a driver, and reference sign J2 denotes a rear passenger. Reference sign 15a in Figs. 10 and 11 denotes a pair of left and right rear frames. The rear frames 15a extend rearward and upward in an inner space K6 of the rear body cover 11d on both left and right sides of the rear body 15.

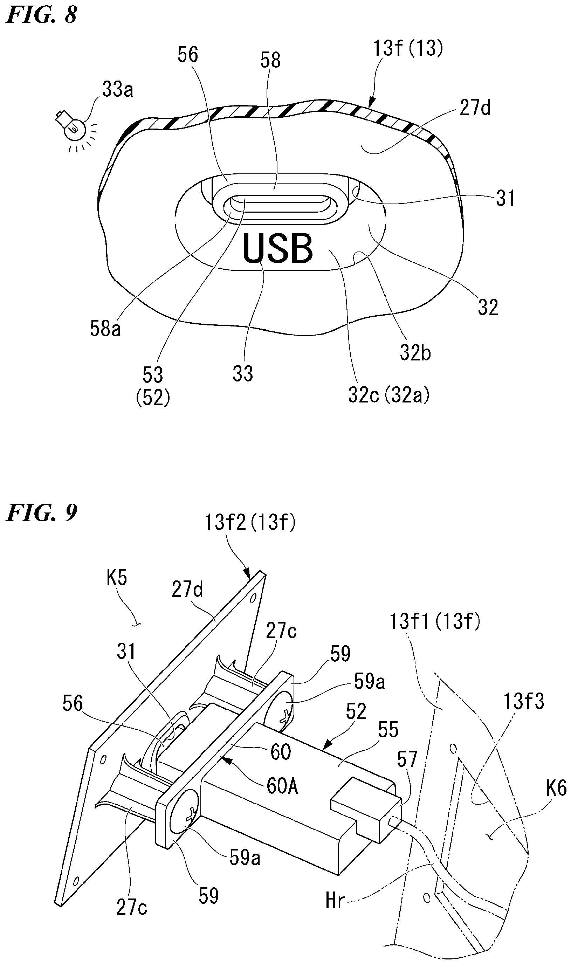

Referring to Figs. 6 and 9, a pair of attachment flanges 59 are provided on both sides in a width direction (the left-right direction in an on-vehicle state) intersecting with the insertion-detachment direction W1 on the detachment side of the casing 55 in the insertion-detachment direction W1. A pair of fastening bosses 27c are provided on both left and right sides of the vehicle body side opening 31 on a side (the rear body cover 11d side) of the side wall 13f opposite to an inner space K5 of the luggage box 13. The pair of attachment flanges 59 are fastened and fixed to the pair of fastening bosses 27c by screws 59a screwed from the front of the fastening bosses. Accordingly, the USB port 52 is fixedly attached to the side wall 13f on the inner space K6 side of the rear body cover 11d.

An upper flange 60 that extends between upper portions of the pair of attachment flanges 59 is provided on an upper surface of the casing 55 in an on-vehicle state. The upper flange 60 is connected to the pair of attachment flanges 59 to be flush with each other and connects the attachment flanges to each other, thereby enhancing attachment strength and rigidity of the USB port 52. The upper flange 60 and the pair of attachment flanges 59 also function as a water blocking portion 60A that blocks water moving along the casing 55 from flowing to the port opening 53 side. Note that the water blocking portion 60Athat blocks the water moving along the casing 55 is not limited to a water blocking wall, and may have a structure for guiding water such as a groove or an inclined shape.

Referring to Figs. 7, 10, and 11, the USB port 52 is disposed to be inclined so that the port opening 53 faces downward with respect to a horizontal direction in an on-vehicle state (so that the detachment side in the insertion-detachment direction W1 is a downward side). Accordingly, it is difficult for water or dust to enter and accumulate in the vicinity of the port opening 53 in the protrusion 58.

The entire USB port 52 including the casing 55 is disposed to be inclined so that the port opening 53 faces downward. In the rear body cover 11d, water flung up by the rear wheel 4 or water that has entered from above the rear body cover 11d may splash on the components inside the rear body cover 11d. When this water splashes on the USB port 52, the water moving along the surface of the casing 55 may reach the vicinity of the port opening 53 through the vehicle body side opening 31. In the USB port 52 of the present embodiment, the upper flange 60 and the pair of attachment flanges 59 are provided on an upper surface and left and right side surfaces of a downward side (the detachment side in the insertion-detachment direction W 1) of the casing 55 in an on-vehicle state. Since the upper flange 60 and the pair of attachment flanges 59 function as a water blocking wall, it is difficult for the water moving along the casing 55 to reach the vicinity of the port opening 53.

Referring to Fig. 7, the casing 55 is provided with a hood 61 protruding to the detachment side in the insertion-detachment direction W1 at a portion spaced from an outer peripheral side of the mouthpiece holding portion 56. A front end portion of the hood 61 is close to or in contact with a back surface of the side wall 13f. Accordingly, even if the water inside the rear body cover 11d approaches the USB port 52 along the back surface of the side wall 13f, the hood 61 prevents the mouthpiece holding portion 56 from being exposed to water and the water does not easily reach the vicinity of the port opening 53. If the hood 61 is configured to be in close contact with the side wall 13f via an elastic seal or the like, the waterproof property in the vicinity of the port opening 53 is further enhanced. The hood 61 is provided to surround an outer periphery of the protrusion 58 over the entire periphery, but it may be provided at least above the protrusion 58 in an eave shape.

The USB port 52 includes a circuit board 62, which is connected to a terminal in the mouthpiece portion 54, inside the casing 55. The circuit board 62 includes, for example, a DC-DC converter, is disposed along upper and lower surfaces of the casing 55 in an on-vehicle state, and is accommodated in the casing 55. The casing 55 opens a lower surface side in an on-vehicle state to form a case opening portion. In the USB port 52, the circuit board 62 is sealed in a watertight manner by injecting potting resin 63 from the case opening portion to fill the casing 55 with the potting resin in a state in which the circuit board 62 is accommodated in the casing 55. The USB port 52 prevents water or dust from accumulating on a potting surface 63a by making the lower surface of the casing 55 in an on-vehicle state as the potting surface 63a where the potting resin 63 is exposed, thereby enhancing the waterproof property and the dustproof property.

Referring to Figs. 7, 10, and 11, most of the USB port 52 is disposed on the back side of the side wall 13f (outside the luggage box 13). The USB port 52 is shielded with the side wall 13f except for the port opening 53 and the protrusion 58. The side wall 13f has a recess 32 obtained by recessing a periphery of the vehicle body side opening 31 when viewed from a front side of the side wall 13f (inside the luggage box 13). The recess 32 is recessed with respect to a flat general surface 27d of the side wall 13f except for a periphery of the vehicle body side opening 31 when viewed from the front side of the side wall 13f. In the recess 32, the protrusion 58 of the casing 55, which protrudes from the vehicle body side opening 31 to the front side of the side wall 13f, faces the front side. The protrusion 58, and consequently the USB port 52, does not protrude to the front side from the general surface 27d of the side wall 13f, and suppresses an influence on an article storage space of the luggage box 13.

The mouthpiece portion 54 inside the protrusion 58 is located on the detachment side in the insertion-detachment direction W 1 with respect to a tip end of the protrusion 58. Accordingly, even if the USB plug 51 is inserted to abut against the USB port 52, the abutting load is not directly transmitted to the mouthpiece portion 54. The casing 55 is fixed to the side wall 13f on the vehicle body side. Accordingly, when the abutting load is input to the protrusion 58, the abutting load is supported on the side wall 13f, that is, the vehicle body side. Therefore, the load input to the mouthpiece portion 54 of the USB port 52 is suppressed, and the protection property in the vicinity of the terminals is enhanced.

The recess 32 has a tapered portion 32a extending in the insertion-detachment direction W1. The tapered portion 32a extends to be widened from a peripheral edge of the vehicle body side opening 31 toward the general surface 27d of the side wall 13f. The tapered portion 32a extends to be inclined for widening the vehicle body side opening 31. Accordingly, the tapered portion 32a functions as a guide portion that guides the USB plug 51 approaching from the detachment side in the insertion-detachment direction W1 to the vehicle body side opening 31, and consequently the port opening 53. The recess 32 makes an opening 32b formed on the general surface 27d of the side wall 13f larger than the vehicle body side opening 31 by the tapered portion 32a that is widened toward the general surface 27d of the side wall 13f. As a result, a user can easily visually and tactually recognize the presence and position of the USB port 52, and usability of the USB port 52 is improved.

Referring to Figs. 7 and 8, the recess 32 is provided with a display portion 33 for notifying a user of the presence and position of the port opening 53. The display portion 33 is provided on a lower wall 32c of the tapered portion 32a, which is inclined upward. The display portion 33 displays text or a mark indicating the presence of the USB port 52 by marking or painting, for example. Since the display portion 33 is formed on an upward surface of the tapered portion 32a, it is easy for a user to see when looking down. Since the USB port 52 is disposed to be inclined downward, an imaginary surface 31a forming the vehicle body side opening 31 is inclined downward, and the lower wall 32c of the tapered portion 32a is widened. Accordingly, the display portion 33 becomes larger and a user can easily recognize the display portion. The side wall 13f is inclined so that a lower side thereof is located on an inner side (inside the luggage box 13) with respect to the vertical direction, and at this point as well, the lower wall 32c of the tapered portion 32a is widened and the display portion 33 becomes larger.

Note that the display portion 33 is not limited to marking or painting, and may be, for example, a light emitting portion that lights or blinks text or a mark. At this time, the lighting or blinking of the light emitting portion may be performed according to the opening and closing of the seat 5, the energization of the USB plug 51, or the operation of a separate switch. The lighting or blinking of the light emitting portion may be performed for a predetermined time only, and the presence or absence of light emission, the color, or the like may be changed according to the energization of the USB plug 51. The display portion 33 itself is not limited to emitting light, and may include a light emitting portion 33a (see Fig. 8) that illuminates the display unit 33. A sign may be mechanically or electrically displayed instead of the light emission.

Referring to Fig. 4, a cord hook 34 is provided in the luggage box 13. A connection cord 51a connected to the USB plug 51 is hooked on the cord hook 34. The cord hook 34 is provided near the USB port 52 on the side wall 13f of the luggage box 13, for example. By hooking and gathering the connection cord 51a on the cord hook 34, the connection cord 51a is less likely to be entangled in the luggage box 13. By retracting the connection cord 51a from the bottom wall 13e of the luggage box 13, it is difficult for the storage article and the connection cord 51a to interfere with each other, and they can be easily put in and taken out. The means for holding the connection cord 51a is not limited to the cord hook 34, and may be a shelf or a pocket. The connection cord 51a is configured as a configuration on the external device side, which is to be attached to and detached from the USB port 52 inside the luggage box 13, but the configuration is not limited to this. For example, the connection cord 51a may be configured as a configuration on the vehicle side, and the USB plug 51 at a tip end of the cord may be handled at a position separated from the side wall 13f. In this case, it is desirable to provide a storage portion for the connection cord 51a in the luggage box 13.

Referring to Figs. 3 and 4, the bottom wall 13e of the luggage box 13 has a bottom wall 13e1 of the front storage compartment 13a and a bottom wall 13e2 of the rear storage compartment 13b. The bottom wall 13e2 of the rear storage compartment 13b is displaced upward with respect to the bottom wall 13e1 of the front storage compartment 13a, and is inclined rearward and upward, for example. The step wall 13b1 is provided between the bottom wall 13e1 of the front storage compartment 13a and the bottom wall 13e2 of the rear storage compartment 13b. The step wall 13b1 rises upward from a rear end of the bottom wall 13e1 of the front storage compartment 13a and reaches a front end of the bottom wall 13e2 of the rear storage compartment 13b. The step wall 13b1 is provided to cross the inside of the luggage box 13 in the left-right direction. Left and right end portions of the step wall 13b1 are connected to both left and right side portions of the side wall 13f, respectively. The step wall 13b1 is, for example, a standing wall that forms an angle of 45 degrees or more with a horizontal plane. The step wall 13b1 defines a rear end of the front storage compartment 13a. The step wall 13b1 forms a part of a side wall 13f surrounding the front storage compartment 13a of the luggage box 13. That is, the step wall 13b1 extends from the upper opening 13d side (the bottom wall 13e2 side of the rear storage compartment 13b) toward the bottom wall 13e (the bottom wall 13e1 of the front storage compartment 13a). Hereinafter, the side wall 13f surrounding the front storage compartment 13a is referred to as a front side wall 13g1.

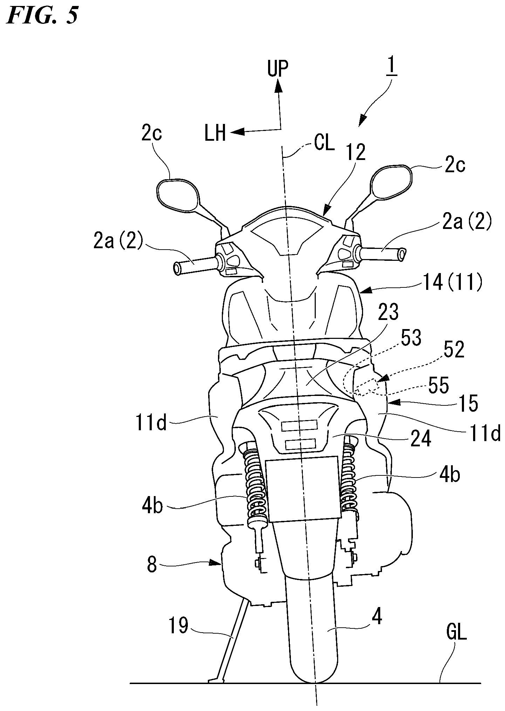

Referring also to Fig. 5, in the present embodiment, the USB port 52 is disposed on a side (a right side) opposite to the side stand 19 in the vehicle width direction. The port opening 53 of the USB port 52 is disposed at a portion in the side wall 13f that circulates inside the luggage box 13 on the side opposite to the side stand 19 in the vehicle width direction (on the right side of a left-right center of the vehicle body).

Referring also to Fig. 7, in the USB port 52, the port opening 53 and the protrusion 58 are exposed inside the luggage box 13 from the vehicle body side opening 31 formed in the side wall 13f. In the USB port 52, the port opening 53 and the protrusion 58 face the inner space K5 of the luggage box 13. In the USB port 52, the port opening 53 is disposed in the side wall 13f on the side opposite to the side stand 19, and thus a user standing on the side stand 19 side can easily see the vicinity of the port opening 53. The port opening 53 faces downward in a vehicle body standing state using the side stand 19, and the waterproof property and the dustproof property when the vehicle is stopped are enhanced. Reference sign GL in Fig. 5 denotes the ground surface.

Note that the USB port 52 and the port opening 53 may be disposed on the side stand 19 side (the left side) of the side wall 13f in the vehicle width direction as long as the port opening 53 faces downward. In this case, the USB port 52 brings the port opening 53 closer to a user standing on the side stand 19 side to enhance usability. The port opening 53 is disposed to face downward at least in a vehicle body standing state using the side stand 19 regardless of whether the port opening 53 is disposed on the left side or right side of the side wall 13f. Accordingly, the waterproof property and the dustproof property when the vehicle is stopped are enhanced. Further, the USB port 52 and the port opening 53 may be disposed in the entire side wall 13f including the step wall 13b1 and having an angle with respect to a horizontal plane, which is equal to or larger than the specified angle.

Referring to Figs. 7, 10, and 11, in the USB port 52, the remaining portions except for the port opening 53 and the protrusion 58 face a space outside the side wall 13f (the inner space K6 of the rear body cover 11d). That is, the USB port 52 is shielded with the side wall 13f except for the port opening 53 and the protrusion 58 when an inside of the luggage box 13 is viewed in the completed motorcycle 1. Further, the USB port 52 is shielded with the rear body cover 11d when an outside of the rear body 15 is viewed in the completed motorcycle 1.

The USB port 52 is inclined in the insertion-detachment direction W1 such that the detachment side is on a downward side. As shown in Fig. 4, in the USB port 52, for example, the insertion-detachment direction W1 (and the longitudinal direction L1) is along the vehicle width direction in a plan view. This suppresses an inclination of the insertion-detachment direction W1 that a user feels, and facilitates insertion-detachment of the USB plug 51.

Meanwhile, in the USB port 52, the insertion-detachment direction W1 (and the longitudinal direction L1) in a plan view may be inclined with respect to a vehicle front-rear direction. In this case, the dimension of the casing 55 in the inner space K6 of the rear body cover 11d in a depth direction (the vehicle width direction) is suppressed, and the disposition of the USB port 52 in the rear body cover 11d is facilitated.

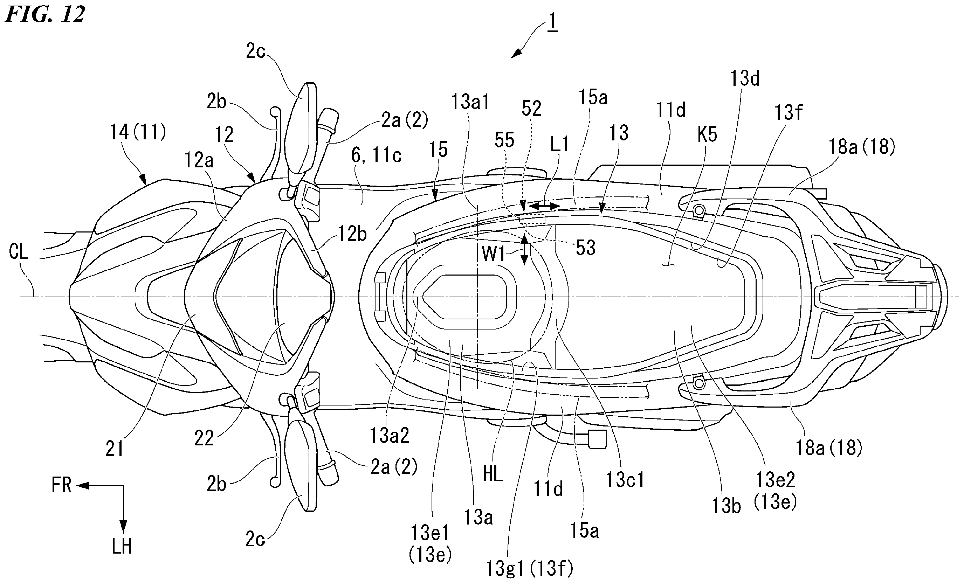

The USB port 52 shown in Fig. 12 is disposed such that the insertion-detachment direction W1 in a plan view is along the vehicle width direction (or is inclined with respect to the vehicle width direction), and the longitudinal direction L1 of the casing 55 that enters the rear body cover 11d intersects with the insertion-detachment direction W1. Specifically, in the USB port 52 shown in Fig. 12, the longitudinal direction L1 of the casing 55 is oriented substantially in the vehicle front-rear direction. In this case, the longitudinal direction L1 of the casing 55 may be along the vehicle front-rear direction or may be inclined with respect to the vehicle front-rear direction. In particular, the longitudinal direction of the casing may be inclined along an outer shape of the rear body cover 11d. This facilitates disposing of the USB port 52 in the space between the rear body cover 11d extending in the vehicle front-rear direction and the luggage box 13.

Referring to Fig. 3, the port opening 53 is disposed in the front side wall 13g1 surrounding the front storage compartment 13a of the luggage box 13. The port opening 53 is disposed at a position avoiding a central portion (shown by a line 13a1 corresponding to the line CL in the drawing) of the front storage compartment 13a in the front-rear direction and a central portion (shown by a line 13a2 in the drawing) of the front storage compartment in the left-right direction. In a case in which the spherical helmet HL is stored in the front storage compartment 13a, the helmet HL approaches the front side wall 13g1 in the central portions 13a1 and 13a2 of the front storage compartment 13a in the front-rear direction and the left-right direction. The port opening 53 is disposed to avoid the central portions 13a1 and 13a2 of the front storage compartment 13a in the front-rear direction and the left-right direction. Accordingly, interference between the helmet HL and the port opening 53 and the USB plug 51 connected thereto can be suppressed.

Referring to Fig. 9, the USB port 52 is attachable to and detachable from the harness Hr arranged on the vehicle body side from inside the luggage box 13. Specifically, the front side wall 13g1 includes a port attachment portion 13f2 which is a separate body from the side wall main body 13f1. The port attachment portion 13f2 is a portion including the fastening boss 27c for attaching the USB port 52 at a periphery of the vehicle body side opening 31. The port attachment portion 13f2 is attachable to and detachable from the side wall main body 13f1 from inside the luggage box 13 in a state in which the USB port 52 is attached to the port attachment portion.

When the USB port 52 is attached to and detached from the vehicle body side harness Hr, attachment and detachment of the USB port 52 are complicated in the following case. That is, this is the case in which the rear body cover 11d that covers an outside of the luggage box 13 is dismantled or the entire luggage box 13 is dismantled. On the other hand, by dismantling the port attachment portion 13f2 from inside the luggage box 13, the port attachment portion 13f2 and the USB port 52 can be dismantled into the luggage box 13. Further, if an opening 13f3 formed by dismantling the port attachment portion 13f2 in the side wall 13f is used, the following effects can be obtained. That is, it is possible to attach and detach the harness Hr to and from the USB port 52 by pulling out the vehicle body side harness Hr from the inner space K6 of the rear body cover 11d to the inner space K5 of the luggage box 13. Moreover, the fastening boss 27c or the like required for attaching the USB port 52 is a separate body from the side wall main body 13f1, and consequently a main body of the luggage box 13, so that the following effects can be obtained. That is, an influence on formability of the luggage box 13 due to provision of the attachment element for the USB port 52 can be suppressed.

As described above, the USB port disposition structure of a saddle-ride type vehicle according to the present embodiment includes the seat 5 on which the occupant sits, the luggage box 13 which is provided below the seat 5 and of which the upper opening 13d is opened and closed by the seat 5, and the USB port 52 into and from which the USB plug 51 of the external device is inserted and detached. The luggage box 13 includes the side wall 13f extending from the upper opening 13d side toward the bottom wall 13e. The USB port 52 has the port opening 53 disposed in the side wall 13f of the luggage box 13, and the port opening 53 opens toward the inside of the luggage box 13.

According to this configuration, it is possible to directly connect the USB plug 51 of the external device stored in the luggage box 13 to the port opening 53 that opens inside the luggage box 13 without using an adapter. For this reason, complexity and reduction of an article storage space due to use of the adapter can be suppressed, and charging, communication, or the like can be performed with respect to various types of external devices including a large external device while accommodating the external devices in the luggage box 13. Therefore, convenience of the vehicle can be improved. Further, since the USB port 52 opens on an inner side surface of the luggage box 13 which is erected, it is difficult for water or dust to enter the port opening 53, the waterproof property and the dustproof property of the USB port 52 are enhanced, and it is difficult for the port opening 53 to be blocked by the stored article. Therefore, convenience of the luggage box 13 and the USB port 52 can be improved.

The above-described USB port disposition structure of a saddle-ride type vehicle includes a side stand 19 which is disposed on one side of the vehicle body in the vehicle width direction to support the vehicle body in a standing state in which the vehicle is inclined to the one side in the vehicle width direction. The port opening 53 is disposed in the side wall 13f opposite to the side stand 19 in the vehicle width direction.

According to this configuration, a user standing on the side stand 19 side can easily see the port opening 53, and usability of the USB port 52 can be enhanced. Further, when the vehicle is stopped using the side stand 19, the port opening 53 easily faces downward due to an inclination of the vehicle body, and the waterproof property and the dustproof property of the USB port 52 can be enhanced.

In the above-described USB port disposition structure of a saddle-ride type vehicle, the port opening 53 is disposed to face downward at least in a vehicle body standing state using the side stand 19.

According to this configuration, when the vehicle is stopped using the side stand 19, the port opening 53 faces downward due to an inclination of the vehicle body, and thus the waterproof property and the dustproof property of the USB port 52 can be enhanced.

In the above-described USB port disposition structure of a saddle-ride type vehicle, the luggage box 13 has the front storage compartment 13a capable of storing the helmet HL. The port opening 53 is disposed to avoid the central portions 13a1 and 13a2 of the front storage compartment 13a in the vehicle front-rear direction and the vehicle width direction.

In a case in which the spherical helmet HL is stored in the front storage compartment 13a, the helmet HL approaches the side wall 13f in the central portions 13a1 and 13a2 of the front storage compartment 13a in the vehicle front-rear direction and the vehicle width direction. Meanwhile, according to the above-described configuration, by disposing the port opening 53 to avoid the central portions 13a1 and 13a2 of the front storage compartment 13a in the vehicle front-rear direction and the vehicle width direction, the port opening 53 and the USB plug 51 connected thereto do not easily affect storage of the helmet HL, and convenience of the luggage box 13 can be enhanced.

In the above-described USB port disposition structure of a saddle-ride type vehicle, the side wall 13f includes the vehicle body side opening 31 that exposes the port opening 53 of the USB port 52 inside the luggage box 13, and the recess 32 obtained by recessing a periphery of the vehicle body side opening 31 from inside the luggage box 13.

According to this configuration, since the port opening 53 is disposed inside the recess 32 provided in the side wall 13f, interference between an article stored in the luggage box 13 and the USB port 52 can be suppressed, and the protection property of the USB port 52 can be enhanced. Further, the recess 32 provided at a periphery of the vehicle body side opening 31 (port opening 53) makes it possible to visually and tactually recognize the presence and position of the port opening 53, and thus it is possible to make insertion of the USB plug 51 easier.

In the above-described USB port disposition structure of a saddle-ride type vehicle, the USB port 52 is attachable to and detachable from the harness Hr arranged on the vehicle body side from inside the luggage box 13.

In the configuration in which the USB port 52 is attached and detached from outside the luggage box 13 when the USB port 52 is attached to and detached from the vehicle body side harness Hr, it is necessary to attach and detach the rear body cover 11d that covers an outside of the luggage box 13 and the entire luggage box, and thus attachment and detachment of the USB port 52 are complicated. Meanwhile, according to the above-described configuration, the USB port 52 can be attached to and detached from the vehicle body side harness Hr from inside the luggage box 13, so that attachment and detachment of the USB port 52 can be facilitated, and assembly and maintenance of the USB port 52 can be improved.

In the above-described USB port disposition structure of a saddle-ride type vehicle, the side wall 13f is a separate body from the side wall main body 13f1 and includes the port attachment portion 13f2 to which the USB port 52 is attached. The port attachment portion 13f2 is attachable to and detachable from the side wall main body 13f1.

According to this configuration, since the port attachment portion 13f2 including the fastening boss 27c and the like required for attaching the USB port 52 is a separate body from the side wall main body 13f1, and consequently a main body of the luggage box, an influence on formability of the luggage box 13 due to provision of the attachment element for the USB port 52 can be suppressed. Further, by dismantling the port attachment portion 13f2, it is possible to attach and detach the vehicle body side harness Hr to and from the USB port 52 from inside the luggage box 13, and attachment and detachment of the USB port 52 can be facilitated.

Note that the present invention is not limited to the above-described embodiments. For example, the saddle-ride type vehicle may be any vehicle in which a driver straddles the vehicle body, including a motorcycle (including a motorized bicycle or a scooter type vehicle) as well as a three-wheeled vehicle (including a vehicle having one front wheel and two rear wheels as well as a vehicle having two front wheels and one rear wheel) or a four-wheeled vehicle.

In the present embodiment, an example in which a USB port having a power supply function and a communication function is installed in a saddle-ride type vehicle has been described, but the present invention is not limited thereto and may be applied to a case in which a USB port having a power supply function or a communication function is installed in a saddle-ride type vehicle. That is, a USB port is a terminal unit into and from which both a connection terminal having a power supply function and a communication function in the external device and a connection terminal having a power supply function or a communication function in the external device can be inserted and detached.

### BRIEF DESCRIPTION OF THE REFERENCE SYMBOLS

1: Motorcycle (saddle-ride type vehicle)
5: Seat
13: Luggage Box (article storage box)
13a: Front storage compartment (storage compartment)
13a1: Central portion in front-rear direction
13a2: Central portion in left-right direction
13d: Upper opening
13e: Bottom wall
13f: Side wall
13f1: Side wall main body
13f2: Port attachment portion (terminal attachment portion)
19: Side stand
31: Vehicle body side opening
32: Recess
50: USB connector
51: USB plug (connection terminal)
51a: Connection cord
52: USB port (USB terminal unit)
53: Port opening (terminal connection port)
W1: Insertion-detachment direction
L1: Longitudinal direction
HL: Helmet
Hr: Harness

## Claims

1. A USB terminal unit disposition structure for a saddle-ride type vehicle, comprising:
a seat (5) on which an occupant sits;
an article storage box (13) which is provided below the seat (5) and of which an upper opening (13d) is opened and closed by the seat (5); and
a USB terminal unit (52) which has at least one of a power supply function and a communication function and into and from which a connection terminal (51) of an external device is inserted and detached in a predetermined insertion-detachment direction (W1),
wherein the article storage box (13) comprises a side wall (13f) extending from the upper opening (13d) toward a bottom wall (13e) thereof,
wherein the USB terminal unit (52) has a terminal connection port (53) disposed in the side wall (13f) of the article storage box (13), and the terminal connection port (53) opens toward an inside of the article storage box (13), and
wherein the side wall (13f) comprises a vehicle body side opening (31) that exposes the terminal connection port (53) of the USB terminal unit (52) inside the article storage box (13),
**characterized in that**
most of the USB terminal unit (52) is disposed on the back side of the side wall (13f) being outside the article storage box (13),
the USB terminal port (52) is shielded with the side wall (13f) except for the terminal connection port (53) and a protrusion (58) of a casing (55) of the USB terminal unit (52),
the side wall (13f) further comprises a recess (32) obtained by recessing a periphery of the vehicle body side opening (31) from inside the article storage box (13),
the recess (32) is recessed with respect to a flat general surface (27d) of the side wall (13f) except for the periphery of the vehicle body side opening (31) when viewed from a front side of the side wall (13f),
in the recess (32), the protrusion (58) of the casing (55), which protrudes from the vehicle body side opening (31) to the front side of the side wall (13f), faces the front side,
the protrusion (58), and consequently the USB terminal unit (52), does not protrude to the front side from the flat general surface (27d) of the side wall (13f), and
the recess (32) has a tapered portion (32a) extending in the insertion-detachment direction (W1), and the recess (32) is provided with a display portion (33) for notifying a user of a presence and a position of the terminal connection port (53), wherein the display portion (33) is provided on a lower wall (32c) of the tapered portion (32a) of the recess (32), which is inclined upward.

2. The USB terminal unit disposition structure for a saddle-ride type vehicle according to claim 1, further comprising:
a side stand (19) which is disposed on one side of a vehicle body in a vehicle width direction to support the vehicle body in a standing state in which the vehicle is inclined to the one side in the vehicle width direction,
wherein the terminal connection port (53) is disposed in the side wall (13f) opposite to the side stand (19) in the vehicle width direction.

3. The USB terminal unit disposition structure for a saddle-ride type vehicle according to claim 1, further comprising:
a side stand (19) which supports the vehicle body in a standing state in which the vehicle is inclined to a one side in a vehicle width direction,
wherein the terminal connection port (53) is disposed to face downward at least in a vehicle body standing state in which the side stand (19) is used.

4. The USB terminal unit disposition structure for a saddle-ride type vehicle according to any one of claims 1 to 3,
wherein the article storage box (13) has a storage compartment (13a) capable of storing a helmet (HL), and
wherein the terminal connection port (53) is disposed to avoid central portions (13a1 and 13a2) of the storage compartment (13a) in a vehicle front-rear direction and a vehicle width direction.

5. The USB terminal unit disposition structure for a saddle-ride type vehicle according to any one of claims 1 to 4, wherein the USB terminal unit (52) is attachable to and detachable from inside the article storage box (13) with respect to a harness (Hr) arranged on a vehicle body side.

6. The USB terminal unit disposition structure for a saddle-ride type vehicle according to any one of claims 1 to 5,
wherein the side wall (13f) comprises a terminal attachment portion (13f2) which is a separate body from a side wall main body (13f1) thereof and to which the USB terminal unit (52) is attached, and
wherein the terminal attachment portion (13f2) is attachable to and detachable with respect to the side wall main body (13f1).

## Patentansprüche

1. Eine Anordnungsstruktur einer USB-Anschlusseinheit für ein Fahrzeug vom Satteltyp, aufweisend:
einen Sitz (5), auf dem ein Benutzer sitzt;
ein unter dem Sitz (5) vorgesehener Gegenstandaufbewahrungsbehälter (13) dessen obere Öffnung (13d) durch den Sitz (5) geöffnet und geschlossen wird; und
eine USB-Anschlusseinheit (52), die eine Stromversorgungsfunktion und/oder eine Kommunikationsfunktion aufweist, und in die und von der ein Verbindungsanschluss (51) eines externen Geräts in einer vorbestimmten Einführungs-/Entfernungsrichtung (W1) eingeführt und entfernt wird,
wobei der Gegenstandaufbewahrungsbehälter (13) eine sich von der oberen Öffnung (13d) zu ihrer Bodenwand (13e) erstreckende Seitenwand (13f) aufweist,
wobei die USB-Anschlusseinheit (52) einen Anschlussverbindungsport (53) aufweist, der in der Seitenwand (13f) des Gegenstandaufbewahrungsbehälters (13) angeordnet ist, wobei sich der Anschlussverbindungsport (53) zu einer Innenseite des Gegenstandaufbewahrungsbehälters (13) öffnet, und
wobei die Seitenwand (13f) eine fahrzeugkarosserieseitige Öffnung (31) aufweist, die den Anschlussverbindungsport (53) der USB-Anschlusseinheit (52) im Inneren des Gegenstandaufbewahrungsbehälters (13) freilegt,
**dadurch gekennzeichnet, dass**
der größte Teil der USB-Anschlusseinheit (52) außerhalb des Gegenstandaufbewahrungsbehälters (13) auf der Rückseite der Seitenwand (13f) angeordnet ist,
der USB-Anschluss (52) mit der Seitenwand (13f), mit Ausnahme des Anschlussverbindungsport (53) und eines Vorsprungs (58) eines Gehäuses (55) der USB-Anschlusseinheit (52), abgeschirmt ist,
die Seitenwand (13f) ferner eine Aussparung (32) aufweist, die durch Aussparen einer Peripherie der seitlichen Öffnung (31) der Fahrzeugkarosserie von der Innenseite des Gegenstandaufbewahrungsbehälters (13) aus erhalten wird,
die Aussparung (32), von einer Vorderseite der Seitenwand (13f) betrachtet, in Bezug auf eine flache Gesamtoberfläche (27d) der Seitenwand (13f), mit Ausnahme der Peripherie der fahrzeugkarosserieseitigen Öffnung (31), ausgespart ist,
in der Aussparung (32) der von der karosserieseitigen Öffnung (31) zur Vorderseite der Seitenwand (13f) vorstehende Vorsprung (58) des Gehäuses (55) zur Vorderseite weist,
der Vorsprung (58) und damit die USB-Anschlusseinheit (52) von der flachen Gesamtoberfläche (27d) der Seitenwand (13f) zur Vorderseite hin nicht vorsteht, und
die Aussparung (32) einen sich in der Einführungs-/Entnahmerichtung (W1) verjüngenden Abschnitt (32a) aufweist, und die Aussparung (32) einen Anzeigebereich (33) aufweist, um einen Benutzer über das Vorhandensein und die Position des Anschlussverbindungsports (53) zu informieren, wobei der Anzeigebereich (33) an der unteren sich nach oben neigenden Wand (32c) des sich verjüngenden Abschnitts (32a) der Aussparung (32) vorgesehen ist.

2. Die Anordnungsstruktur einer USB-Anschlusseinheit für ein Fahrzeug vom Satteltyp nach Anspruch 1, ferner aufweisend:
einen Seitenständer (19), der, in einer Fahrzeugbreitenrichtung, an einer Seite der Fahrzeugkarosserie angeordnet ist, um die Fahrzeugkarosserie in einem stehenden Zustand, in dem das Fahrzeug zu der einen Seite in der Fahrzeugbreitenrichtung geneigt ist, zu stützen,
wobei der Anschlussverbindungsport (53), in Fahrzeugbreitenrichtung, in der dem Seitenständer (19) gegenüberliegenden Seitenwand (13f) angeordnet ist.

3. Die Anordnungsstruktur einer USB-Anschlusseinheit für ein Fahrzeug vom Satteltyp nach Anspruch 1, ferner aufweisend:
einen Seitenständer (19), der die Fahrzeugkarosserie in einem stehenden Zustand, in dem das Fahrzeug zu einer Seite in einer Fahrzeugbreitenrichtung geneigt ist, stützt,
wobei der Anschlussverbindungsport (53) so angeordnet ist, dass er zumindest in einem stehenden Zustand der Fahrzeugkarosserie, in dem der Seitenständer (19) verwendet wird, nach unten weist.

4. Die Anordnungsstruktur einer USB-Anschlusseinheit für ein Fahrzeug vom Satteltyp nach einem der Ansprüche 1 bis 3,
wobei der Gegenstandaufbewahrungsbehälter (13) ein Aufbewahrungsfach (13a) aufweist, das einen Helm (HL) aufnehmen kann, und
wobei der Anschlussverbindungsport (53) so angeordnet ist, dass er zentrale Abschnitte (13a1 und 13a2) des Aufbewahrungsfachs (13a) in einer Vorne-Hinten-Richtung und in einer Breitenrichtung des Fahrzeugs vermeidet.

5. Die Anordnungsstruktur einer USB-Anschlusseinheit für ein Fahrzeug vom Satteltyp nach einem der Ansprüche 1 bis 4,
wobei die USB-Anschlusseinheit (52), in Bezug auf einen an einer Fahrzeugkarosserieseite angeordneten Kabelbaum (Hr), an der Innenseite des Gegenstandaufbewahrungsbehälters (13) angebracht und von diesem abgenommen werden kann.

6. Die Anordnungsstruktur einer USB-Anschlusseinheit für ein Fahrzeug vom Satteltyp nach einem der Ansprüche 1 bis 5,
wobei die Seitenwand (13f) einen Anschlussbefestigungsabschnitt (13f2) aufweist, der einen von einem Seitenwand-Hauptkörper (13f1) getrennten Körper darstellt und an dem die USB-Anschlusseinheit (52) befestigt ist, und
wobei der Anschlussbefestigungsabschnitt (13f2) an dem Seitenwand-Hauptkörper (13f1) befestigt werden kann und in Bezug auf diesen abgenommen werden kann.

## Revendications

1. Structure de disposition d'unité de borne USB pour un véhicule de type à selle, comprenant :
un siège (5) sur lequel un occupant s'assoit ;
une boîte de rangement d'articles (13) qui est prévue au-dessous du siège (5) et dont une ouverture supérieure (13d) est ouverte et fermée par le siège (5) ; et
une unité de borne USB (52) ayant au moins l'une parmi une fonction d'alimentation électrique et une fonction de communication et dans laquelle/de laquelle une borne de connexion (51) d'un dispositif externe est insérée/détachée dans une direction d'insertion/détachement prédéterminée (W1),
dans laquelle la boîte de rangement d'articles (13) comprend une paroi latérale (13f) s'étendant de l'ouverture supérieure (13d) vers une paroi inférieure (13e) de celle-ci,
dans laquelle l'unité de borne USB (52) présente un port de connexion de borne (53) disposé dans la paroi latérale (13f) de la boîte de rangement d'articles (13), et le port de connexion de borne (53) s'ouvre vers un intérieur de la boîte de rangement d'articles (13), et
dans laquelle la paroi latérale (13f) comprend une ouverture latérale de corps de véhicule (31) qui expose le port de connexion de borne (53) de l'unité de borne USB (52) à l'intérieur de la boîte de rangement d'articles (13),
**caractérisée en ce que**
la majeure partie de l'unité de borne USB (52) est disposée sur le côté arrière de la paroi latérale (13f) étant à l'extérieur de la boîte de rangement d'articles (13),
le port de borne USB (52) est protégé par la paroi latérale (13f) hormis le port de connexion de borne (53) et une saillie (58) d'un boîtier (55) de l'unité de borne USB (52),
la paroi latérale (13f) comprend en outre un évidement (32) obtenu par renfoncement d'une périphérie de l'ouverture latérale de corps de véhicule (31) à partir de l'intérieur de la boîte de rangement d'articles (13),
l'évidement (32) est renfoncé par rapport à une surface générale plate (27d) de la paroi latérale (13f) hormis la périphérie de l'ouverture latérale de corps de véhicule (31) en vue depuis un côté avant de la paroi latérale (13f),
dans l'évidement (32), la saillie (58) du boîtier (55), qui est saillante depuis l'ouverture latérale de corps du véhicule (31) vers le côté avant de la paroi latérale (13f), fait face au côté avant,
la saillie (58), et par conséquent l'unité de borne USB (52), ne sont pas saillantes vers le côté avant depuis la surface générale plate (27d) de la paroi latérale (13f), et
l'évidement (32) présente une partie effilée (32a) s'étendant dans la direction d'insertion/détachement (W1), et l'évidement (32) est doté d'une partie d'affichage (33) pour notifier un utilisateur d'une présence et d'une position du port de connexion de borne (53), dans laquelle la partie d'affichage (33) est prévue sur une paroi inférieure (32c) de la partie effilée (32a) de l'évidement (32), qui est inclinée vers le haut.

2. Structure de disposition d'unité de borne USB pour un véhicule de type à selle selon la revendication 1, comprenant en outre :
une béquille latérale (19) qui est disposée sur un côté d'un corps de véhicule dans une direction de largeur de véhicule pour supporter le corps de véhicule dans un état debout dans lequel le véhicule est incliné vers l'un côté dans la direction de largeur de véhicule,
dans laquelle le port de connexion de borne (53) est disposé dans la paroi latérale (13f) à l'opposé de la béquille latérale (19) dans la direction de largeur du véhicule.

3. Structure de disposition d'unité de borne USB pour un véhicule de type à selle selon la revendication 1, comprenant en outre :
une béquille latérale (19) qui supporte le corps de véhicule dans un état debout dans lequel le véhicule est incliné vers un côté dans une direction de largeur de véhicule,
dans laquelle le port de connexion de borne (53) est disposé pour faire face vers le bas au moins dans un état debout de corps de véhicule dans lequel la béquille latérale (19) est utilisée.

4. Structure de disposition d'unité de borne USB pour un véhicule de type à selle selon l'une quelconque des revendications 1 à 3,
dans laquelle la boîte de rangement d'articles (13) présente un compartiment de rangement (13a) permettant de ranger un casque (HL), et
dans laquelle le port de connexion de borne (53) est disposé pour éviter des parties centrales (13a1 et 13a2) du compartiment de rangement (13a) dans une direction avant-arrière de véhicule et dans une direction de largeur de véhicule.

5. Structure de disposition d'unité de borne USB pour un véhicule de type à selle selon l'une quelconque des revendications 1 à 4, dans laquelle l'unité de borne USB (52) est fixable à et détachable d'un intérieur de la boîte de rangement d'articles (13) par rapport à un faisceau (Hr) agencé sur un côté de corps de véhicule.

6. Structure de disposition d'unité de borne USB pour un véhicule de type à selle selon l'une quelconque des revendications 1 à 5,
dans laquelle la paroi latérale (13f) comprend une partie de fixation de borne (13f2) qui est un corps distinct d'un corps principal de paroi latérale (13f1) de celle-ci et à laquelle l'unité de borne USB (52) est fixée, et
dans laquelle la partie de fixation de borne (13f2) est fixable au et détachable du corps principal de paroi latérale (13f1).
